**Europäisches Patentamt**

**European Patent Office**

**Office européen des brevets**

(11) Veröffentlichungsnummer: **0 153 726**

**A2**

(12) # EUROPÄISCHE PATENTANMELDUNG

(21) Anmeldenummer: **85102081.8**

(51) Int. Cl.⁴: **B 60 R 22/46**

(22) Anmeldetag: **26.02.85**

(30) Priorität: **29.02.84 DE 3407378**

(43) Veröffentlichungstag der Anmeldung:
**04.09.85 Patentblatt 85/36**

(84) Benannte Vertragsstaaten:
**FR GB IT SE**

(71) Anmelder: **AUTOFLUG GMBH**
**Industriestrasse 10 Postfach 1180**
**D-2084 Rellingen(DE)**

(72) Erfinder: **Butenop, Klaus, Dipl.-Ing.**
**Obendeich 29**
**D-2209 Herzhorn(DE)**

(72) Erfinder: **Kröger, Doris**
**Burdiekstrasse 11**
**D-2200 Elmshorn(DE)**

(74) Vertreter: **Kühnemann, Klaus et al,**
**Patentanwälte Dipl.-Ing. Klaus Kühnemann Dr.-Ing.**
**Karl-Ernst Müller Sonderburgstrasse 36**
**D-4000 Düsseldorf 11(DE)**

(54) **Sicherheitsgurtaufroller mit Strammvorrichtung.**

(57) Bei einem Sicherheitsgurtaufroller mit einer Strammvorrichtung, bestehend aus einem druckmittelbeaufschlagten Kolben, der mit räumlichen Bezug zur Gurtaufwickelwelle des Gurtaufrollers angeordnet und im Auslösefall über einen Seiltrieb mit dieser verbindbar ist, besteht das Problem, daß nach Auslösung der Strammvorrichtung und Beendigung des Strammvorganges die Gurtaufwickelwelle durch die Strammvorrichtung in ihrer Stellung blockiert und damit in ihrem weiteren Gebrauch nicht mehr funktionstüchtig ist. Zur Beseitigung des sich daraus ergebenden Nachteils, daß die vorgeschriebene Arbeitsweise eines selbstsperrenden Gurtaufrollers nach Auslösung der Strammvorrichtung nicht mehr gegeben ist, wird vorgeschlagen, an der das Antriebsseil (13) aufnehmenden Seilscheibe (15) federbelastet ein Sperrglied (24) zum Eingriff in entsprechende Gestaltungen (31, 32) an der Gurtaufwickelwelle (16) und zur sich nach dem Strammvorgang lösenden Verbindung von Seilscheibe (15) und Gurtaufwickelwelle (16) anzuordnen.

Fig.1

**Patentanwälte**
Dipl.-Ing. Klaus Kühnemann
Dr.-Ing. Karl-Ernst Müller
Sonderburgstraße 36
4000 Düsseldorf 11
Telefon (02 11) 57 55 55
Postgirokonto: Köln 794 14-501

Düsseldorf, den 21. Januar 1985
KM/scn

**0153726**

Autoflug GmbH
Industriestraße 10
2084 Rellingen 2

B e s c h r e i b u n g

Sicherheitsgurtaufroller mit Strammvorrichtung

Die Erfindung betrifft einen Sicherheitsgurtaufroller
mit einer Strammvorrichtung, bestehend aus einem
druckmittelbeaufschlagten Kolben, der mit räumlichen
Bezug zur Gurtaufwickelwelle des Gurtaufrollers angeordnet und im Auslösefall über einen Seiltrieb mit
dieser verbindbar ist.

Eine an einem Sicherheitsgurtaufroller vorzusehende
Strammeinrichtung ist beispielsweise in der DE-OS
30 40 667 beschrieben. Dabei ist am Gehäuse des
Gurtaufrollers ein Zylinder angebracht, in
welchem ein druckgasbetätigter Kolben beweglich
angeordnet ist. Der Kolben ist über einen
Seiltrieb getrieblich mit der Aufwickelwelle
des Sicherheitsgurtaufrollers verbunden, indem das
Antriebsseil ortsfest angelenkt und über eine am Kolben angebrachte Seilumlenkung ins Innere einer über die Gurtaufwickelwelle des Gurtaufrollers geschobenen Hülse geführt ist, dort in mehreren Windungen um die Gurtaufwickelwelle liegt und von dort zu einer Vorratsrolle weitergeführt ist. Dabei sollen die Windungen des Antriebsseiles vorzugsweise an der Innenseite der Hülse anliegen, und die Umschlingung des Antriebsseiles um die Gurtaufwickelwelle soll zweieinhalb Windungen betragen.

Im Unfallgeschehen, wenn durch einen fahrzeugseitigen Sensor die im Zylinder befindliche pyrotechnische Ladung gezündet wird und die entstehenden Druckgase den Kolben beaufschlagen, wird der Kolben mit Umlenkrolle in Richtung vom Gurtaufroller weggetrieben. Hierdurch wird das Antriebsseil straffgezogen und legt sich mit seinen Windungen im Ringraum um einen entsprechenden Fortsatz der Gurtaufwickelwelle fest, wodurch die Welle infolge des durch den Umschlingungswinkel hervorgerufenen Kraftschlusses gedreht und damit der Sicherheitsgurt gestrammt wird.

Mit einer derartigen Ausbildung eines Gurtaufrollers mit einer Strammvorrichtung ist jedoch der Nachteil verbunden, daß nach der Auslösung des pyrotechnischen Treibsatzes und der damit verbundenen Betätigung des Seiltriebes eine unlösbare Kopplung von Strammvorrichtung und Gurtaufwickelwelle vorgenommen ist. Als Folge davon ist die Gurtaufwickelwelle nach Beendigung des Strammvorganges in ihrer

dann erreichten Stellung blockiert und ohne eine Ablösung der Strammvorrichtung von der Gurtaufwickelwelle, die nur durch entsprechenden Ausbau der Aggregate erfolgen kann, nicht mehr im Sinne einer gurtband- wie auch fahrzeugsensitiven Blockierung funktionstüchtig, wie dies bei einem Gurtaufroller ohne Strammvorrichtung, beispielsweise entsprechend der DE-OS 28 23 343, vorgeschrieben ist.

Dieser Umstand ist deswegen als schwerwiegender Nachteil einzustufen, weil der selbstsperrende Gurtaufroller nach einer unbeabsichtigten Auslösung der Strammvorrichtung damit seiner Aufgabe, den Insassen bei einem Unfall am Sitz festzuhalten und eine den Insassen gefährdende Vorwärtsverlagerung des Körpers zu verhindern, nicht mehr gerecht werden kann. Wenn es zum Beispiel bei einem in der Garage abgestellten Fahrzeug zu einer selbsttätigen Auslösung der Strammvorrichtung gekommen ist, so ist dieser Umstand von außen nicht feststellbar. Sobald sich jedoch eine Person in das Fahrzeug setzt, so ist der Gurtaufroller aus den beschriebenen Gründen nicht mehr funktionsfähig und gefährdet somit die Sicherheit des Insassen bei einem eventuellen Unfall.

Der Erfindung liegt daher die Aufgabe zugrunde, einen Sicherheitsgurtaufroller mit einer Strammvorrichtung der eingangs genannten Gattung so weiterzubilden, daß der Gurtaufroller auch nach Auslösung der Strammvorrichtung bzw. Beendigung des Strammvorganges erneut brauchbar und mittels seines gurtband- wie auch fahrzeug-

- 4 - 0153726

sensitiven Blockiersystems blockierbar ist.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Mit der Erfindung ist der Vorteil verbunden, daß eine Auslösung der Strammvorrichtung und die damit verbundene feste Verbindung von Seiltrieb und Gurtaufwickelwelle nicht mehr zu einer Beeinträchtigung der Blockiereigenschaften des Gurtaufrollers führt, da die Kopplung von Seiltrieb und Gurtaufwickelwelle sich selbsttätig wieder aufheben kann, wonach der Gurtaufroller ohne die Strammvorrichtung wieder voll funktionsfähig ist. Dies hat seinen Vorteil auch darin, daß das Fahrzeug auch nach einem Unfall mit Auslösung der Strammvorrichtung weitergefahren werden kann, wobei den Insassen die volle, durch den selbstsperrenden Gurtaufroller vermittelte Sicherheit erhalten bleibt.

Bei einem bevorzugten Ausführungsbeispiel der Erfindung ist an der Seilscheibe ein radial auslenkbares Sperrglied exzentrisch derart gelagert, daß es bei Drehung der Seilscheibe beim Strammvorgang gegenüber dieser Drehbewegung zurückbleibt und aufgrund seiner exzentrischen Lagerung bis zum Eingreifen seiner Außenverzahnung in einen an der Gurtaufwickelwelle angeschlagenen Zahnring ausgelenkt wird und so die Drehbewegung der Seilscheibe in eine Strammbewegung der Gurtaufwickelwelle umsetzt. Aufgrund seiner
federbelasteten Kopplung an die Seilscheibe
schwenkt das Sperrglied bei Stillstand der
Seilscheibe nach Beendigung des Strammvorganges
wieder in seine Ruhelage zurück und gibt so
die Gurtaufwickelwelle wieder frei.

Zusätzlich zu dieser Verbindung von Gurtaufwickelwelle und Seilscheibe kann vorgesehen sein, eine besondere Dämpfung der schockartig auftretenden Drehbelastung der Seilscheibe vorzusehen. Hierzu ist der
Zahnring gegenüber der Kupplungsscheibe verdrehbar
eingerichtet, wobei infolge geeigneter formgestalterischer Maßnahmen durch die Verdrehung der Bauteile
gegeneinander eine teilweise Vernichtung der aufgebrachten Energie erfolgt. Auf diese Weise wird die gesamte Kinematik vor einer Zerstörung bzw. Beeinträchtigung durch die bei Auslösung der Strammvorrichtung
schockartig auftretenden Spitzenkräfte geschützt.

Schließlich ist die Erfindung nicht auf Strammvorrichtungen mit Druckmittelantrieb beschränkt, sondern
ist auch auf Strammvorrichtungen mit anderen Kraftspeichern, beispielsweise in Form von bewegten
Massen, vorgespannten Federn und dgl. anwendbar.

In der Zeichnung sind Ausführungsbeispiele der
Erfindung wiedergegeben, welche nachstehend
erläutert sind. Es zeigen:

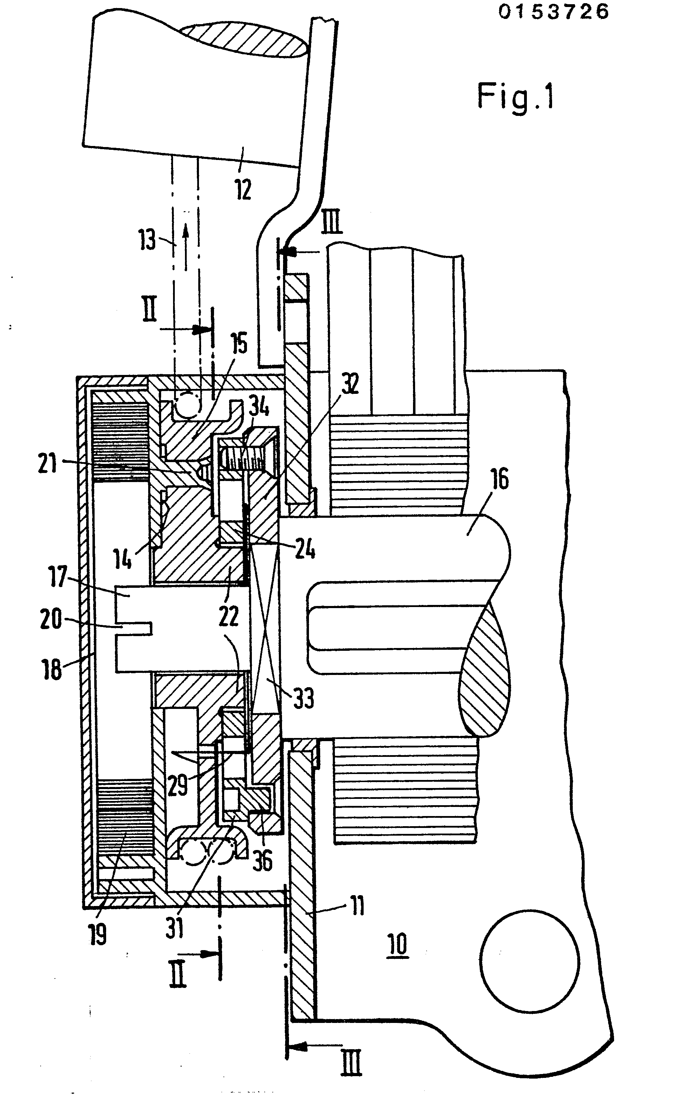

Fig. 1   den Sicherheitsgurtaufroller mit Strammvorrichtung und Seiltrieb in einer
         teilweise geschnittenen Vorderansicht,

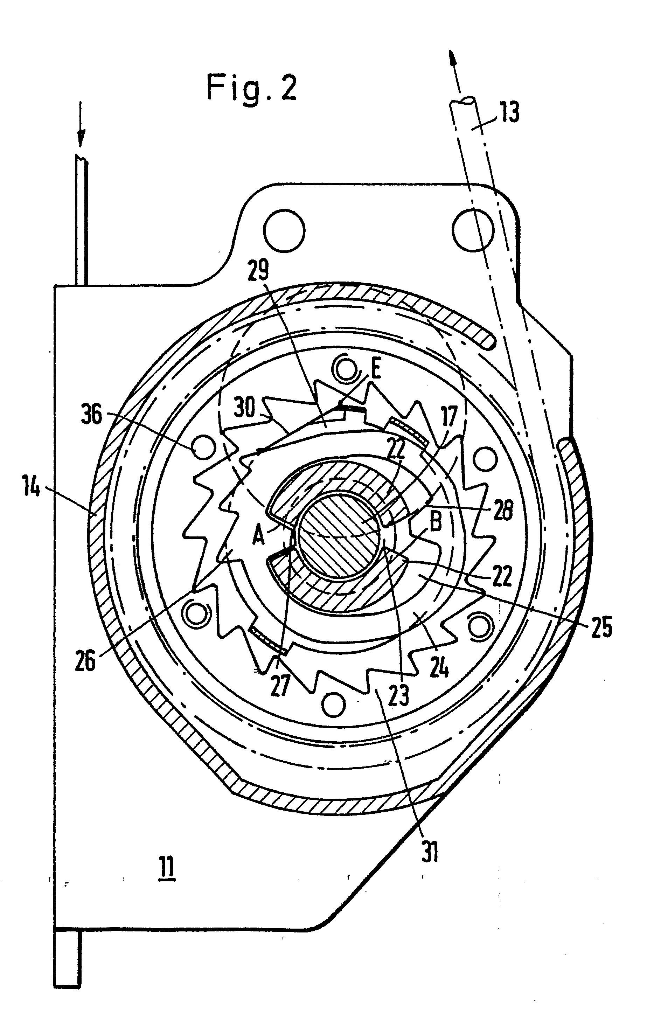

Fig. 2   den Sicherheitsgurtaufroller in einem Längsschnitt nach Linie II - II in Figur 1,

Fig. 3   die Kupplungsscheibe in einer Aufsicht
         entsprechend Linie III - III in Figur 1.

Ein selbstsperrender Sicherheitsgurtaufroller 10 weist an seiner, der sogenannten, nicht dargestellten Systemseite mit gurtband- und fahrzeugsensitiver Blockiervorrichtung gegenüberliegenden Seite an seinem dort angeordneten Gehäuseschenkel 11 einen daran befestigten Zylinder 12 auf, in welchem ein nicht dargestellter Kolben mit pyrotechnischer Treibladung untergebracht ist. An dem Kolben ist ein Antriebsseil 13 angeschlagen, welches durch ein Gehäuse 14 des Sicherheitsgurtaufrollers 10 hindurch bis zu einer Seilscheibe 15 geführt, dort auf deren Umfang aufgewickelt und schließlich daran befestigt ist.

Die Seilscheibe 15 ist auf einem Fortsatz 17 der Gurtaufwickelwelle 16 gelagert, welche den Gehäuseschenkel 11 des Gurtaufrollers 10 lagernd durchstößt. An der dem Gurtaufroller 10 abgewandten Seite der Seilscheibe 15 ist auf dem Fortsatz 17 das topfartig ausgebildete Gehäuse 14 angeordnet, welches die Seilscheibe 15 bis zum Anschlag am Gehäuseschenkel 11 einhüllt und welches nach außen einen Umfangskranz aufweist, so daß sich eine napfartige Gestaltung ergibt, welche durch eine Gehäuseabdeckung 18 verschlossen ist. In dem so gebildeten Napf ist eine Rückholfeder 19 für die Gurtaufwickelwelle 16 angeordnet, die mit ihrem einen Ende an dem Außenumfang des Gehäuses 14 und mit dem anderen Ende an der hierzu mit einem Schlitz 20 am Ende des Fortsatzes 17 versehenen Gurtaufwickelwelle 16 eingehängt ist.

Während das auf dem Wellenfortsatz 17 der Gurtaufwickelwelle 16 angeordnete Gehäuse 14 feststehend ist, ist die Seilscheibe 15 gegen das Gehäuse 14 verdrehbar gelagert und in ihrer Ruhestellung durch drei Abreißzapfen 21 mit dem Gehäuse 14 verbunden, die am Gehäuse 14 ausgeprägt sind und in entsprechende Ausnehmungen in der Seilscheibe 15 eingreifen und so die Seilscheibe 15 in der Ruhestellung axial und radial sichern.

Auf der dem Gurtaufroller 10 zugewandten Seite der Seilscheibe 15 sind sich aus der Ebene der Seilscheibe 15 erhebend konzentrisch um deren Lagerung auf dem Wellenfortsatz 17 zwei Ringsegmente 22 mit dazwischenliegenden Lücken 23 angeordnet, auf denen ein Sperrglied 24 mit einer Mittenausnehmung 25 und einer teilweisen Umfangsverzahnung 26 exzentrisch gelagert ist. Der Exzenterpunkt E für die exzentrische Lagerung des Sperrgliedes 24 auf den Ringsegmenten 22 der Seilscheibe 15 ist außerhalb des Sperrgliedes 24 angeordnet, wodurch das Sperrglied 24 auf einer Kreisbahn 27 um einen zum Ausschwenken notwendigen Winkel bewegt werden kann. Die Mittenausnehmung 25 des Sperrgliedes 24 ist schmetterlingsförmig gestaltet, wobei die nach innen gezogenen Lagervorsprünge 28 je nach Stellung des Sperrgliedes 24 in die Lücken 23 zwischen den Ringsegmenten 22 der Seilscheibe 15 eingreifen. Die sich jeweils berührenden Flächen A, B sind einander formentsprechend gestaltet und weisen insbesondere dem Radius der Kreisbahn 27 folgende Rundungen auf. Das Sperrglied 24 ist ferner durch eine Klammer 29 axial an der Seilscheibe 15 gehalten und wird durch einen das Sperrglied 24 an dessen

- 8 -

0153726

Umfang angreifenden und radial nach innen drückenden Federarm 30 in seiner innenliegenden Ruhestellung gehalten.

In der Ebene des Sperrgliedes 24 ist dieses umgreifend ein innenverzahnter Zahnring 31 angeordnet, der seinerseits an einer Kupplungsscheibe 32 befestigt ist, die formschlüssig mit der Gurtaufwickelwelle 16 verbunden ist, indem die Kupplungsscheibe 32 mit einer viereckigen Ausnehmung einen an der Gurtaufwickelwelle 16 im Abschnitt zwischen Gehäuseschenkel 11 und Wellenfortsatz 17 ausgebildeten Vierkant 33 übergreift.

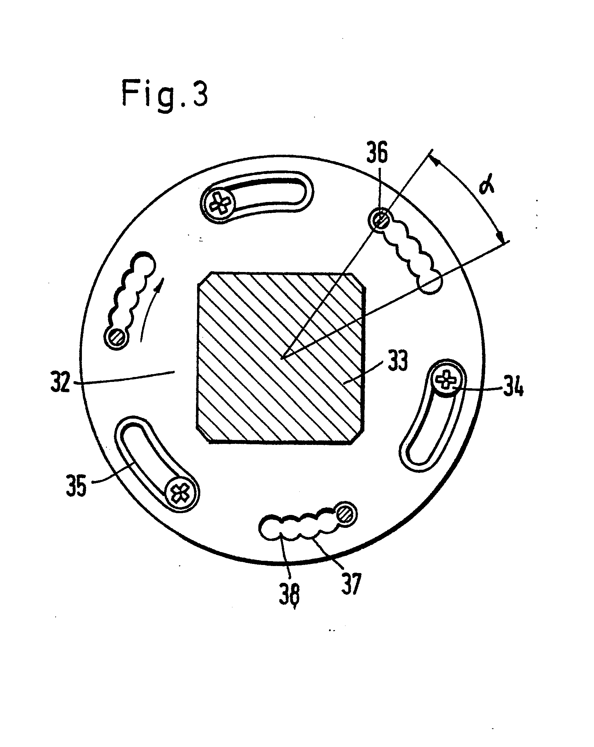

Die Verbindung von Zahnring 31 und Kupplungsscheibe 32 ist derart ausgebildet, daß die beiden Bauteile um einen Winkel alpha (Figur 3) gegeneinander verdrehbar sind. Hierzu sind die Bauteile zunächst durch drei Schrauben 34 miteinander verbunden, welche mit ihren Schraubenköpfen an der Kupplungsscheibe 32 anliegen und mit den Schäften in in Umfangsrichtung des Zahnringes 31 verlaufende langlochartige Ausnehmungen 35 eingreifen. Zusätzlich sind an dem Zahnring 31 drei Zapfen 36 ausgeprägt, die ihrerseits in an der Kupplungsscheibe 32 entsprechend angeordnete langlochartige Schlitze 37 eingreifen, wobei diese Schlitze 37 taillenartige Einengungen 38 aufweisen, die im Abstand des Durchmessers der Zapfen 36 angeordnet sind.

Der erfindungsgemäße Sicherheitsgurtaufroller mit Strammvorrichtung arbeitet folgendermaßen:

Nach Auslösung der im Zylinder 12 befindlichen
Treibladung durch einen das Unfallgeschehen
aufnehmenden fahrzeugseitigen Sensor treiben
die entstehenden Treibgase den Kolben vor
sich her, wodurch am Antriebsseil 13 kurzzeitig eine hohe Kraft entsteht, welche durch
Abwickeln des Antriebsseiles 13 von der Seilscheibe 15 die Seilscheibe 15 in Drehung versetzt.
Hierbei werden zunächst die die axiale und
radiale Sicherung der Seilscheibe in ihrer
Ruhelage bewirkenden Abreißzapfen 21 abgeschert,
wonach die Seilscheibe 15 auf dem Wellenfortsatz
17 drehbar ist.

Das an der Seilscheibe 15 exzentrisch gelagerte
Sperrglied 24 bleibt aufgrund seiner eigenen
Massenträgheit hinter der Drehbewegung der
Seilscheibe 15 zurück und schwenkt aufgrund
seiner exzentrischen Lagerung gegen die Vorspannung des Federarmes 30 um den Exzenterpunkt
E nach außen, bis die Umfangsverzahnung 26
des Sperrgliedes 24 in Eingriff mit der Innenverzahnung des Zahnringes 31 gelangt.

Das schockartig auftretende vom Sperrglied
24 auf den Zahnring 31 übertragene hohe Drehmoment wird zu Beginn der Strammbewegung zunächst gedämpft, indem die am Zahnring 31
ausgeprägten Zapfen 36 durch die taillenförmigen
Einengungen 38 in den Schlitzen 37 gepreßt
werden, wobei eine entsprechende Verformungsarbeit
mit einhergehender Vernichtung der Spitzenenergie
erfolgt. Da gleichzeitig die Schrauben 34
an der Kupplungsscheibe 32 in den Ausnehmungen
35 im Zahnring 31 ebenfalls um das gleiche

Maß bewegbar sind, stehen diese Befestigungsmittel der gegenseitigen Verdrehung der beiden
Bauteile Zahnring 31 und Kupplungsscheibe
32 zur Leistung einer energievernichtenden
Verformungsarbeit nicht entgegen. In diesem
Zusammenhang versteht es sich, daß eine gegenseitige Verdrehung, deren größtes Maß durch
die Länge der Ausnehmungen 35 bzw. Schlitze
37 bestimmt ist, nur in dem Maß stattfindet,
in welchem ein zu hoher Anfangsdruck und damit
ein dementsprechend erzeugtes zu hohes Anfangsdrehmoment durch die Dämpfungsmaßnahmen abgefangen
werden muß, weswegen nicht in jedem Falle
ein Erreichen der Endstellung von Schrauben
34 und Zapfen 36 in der jeweils zugeordneten
Ausnehmungen 35 bzw. Schlitzen 37 gegeben
sein muß.

In jedem Fall bewirkt jedoch der Eingriff
des von der Seilscheibe 15 beim Strammvorgang
in Drehung versetzten Sperrgliedes 24 in den
Zahnring 31 eine Drehung auch des Zahnringes
31 mit Kupplungsscheibe 32, wodurch aufgrund
der formschlüssigen Lagerung der Kupplungsscheibe
32 auf der Gurtaufwickelwelle 16 letztendlich
die Drehbewegung der Seilscheibe 15 in eine
den Sicherheitsgurt strammende Drehbewegung
der Gurtaufwickelwelle 16 umgesetzt wird.
Das dabei zu übertragende Drehmoment zwischen
Sperrglied 24 und Seilscheibe 15 wird an den
Flächen A, B der Ringsegmente 22 der Seilscheibe
15 bzw. Lagervorsprünge 28 des Sperrgliedes
24 übertragen.

Nach Abschluß des Strammvorganges aufgrund
der verbrauchten Energie und Abzuges des Antriebsseiles 13 von der Seilscheibe 15 wird das
Sperrglied 24 bei geringer Gurtentlastung
durch die Wirkung der radial nach innen gerichteten
Kraft des Federarmes 30 wieder in seine Ruhelage
zurückgedrängt, so daß die Umfangsverzahnung
26 des Sperrgliedes 24 aus der Verzahnung
des Zahnringes 31 freikommt. Auf diese Weise
ist die kraftübertragende Verbindung zwischen
Seilscheibe 15 und Gurtaufwickelwelle 16 wieder
aufgehoben, so daß die Gurtaufwickelwelle
16 frei drehbar und nunmehr der Einwirkung
des nicht dargestellten fahrzeug- oder gurtbandsensitiven Blockiersystems im Normalbetrieb
des Sicherheitsgurtaufrollers unterworfen
ist.

Die in der vorstehenden Beschreibung, den
Patentansprüchen, der Zusammenfassung und
der Zeichnung offenbarten Merkmale des Gegenstandes dieser Unterlagen können sowohl einzeln
als auch in beliebigen Kombinationen untereinander für die Verwirklichung der Erfindung
in ihren verschiedenen Ausführungsformen wesentlich sein.

Patentansprüche

Patentansprüche

1. Sicherheitsgurtaufroller mit einer Strammvorrichtung, bestehend aus einem druckmittelbeaufschlagten Kolben, der mit räumlichen Bezug
zur Gurtaufwickelwelle des Gurtaufrollers
angeordnet und im Auslösefall über einen
Seiltrieb mit dieser verbindbar ist, dadurch
gekennzeichnet, daß an der das Antriebsseil
(13) aufnehmenden Seilscheibe (15) federbelastet ein Sperrglied (24) zum Eingriff in
entsprechende Gestaltungen (31, 32) an der
Gurtaufwickelwelle (16) und zur sich nach
dem Strammvorgang lösenden Verbindung von
Seilscheibe (15) und Gurtaufwickelwelle (16)
angeordnet ist.

0153726

2. Sicherheitsgurtaufroller nach Anspruch 1,
dadurch gekennzeichnet, daß das Sperrglied
(24) auf der dem Gurtaufroller (10) zugewandten
Seite der Seilscheibe (15) an dieser exzentrisch
gelagert ist.

3. Sicherheitsgurtaufroller nach Anspruch 2,
dadurch gekennzeichnet, daß die Seilscheibe
(15) auf ihrer dem Gurtaufroller (10) zugewandten
Seite zwei aus der Ebene der Seilscheibe
(15) vorstehende Ringsegmente (22) mit dazwischen angeordneten Lücken (23) aufweist,
wobei das Sperrglied (24) mit einer Ausnehmung
(25) die Ringsegmente (22) übergreift.

4. Sicherheitsgurtaufroller nach Anspruch 3,
dadurch gekennzeichnet, daß die Ausnehmung
(25) des Sperrgliedes (24) schmetterlingsförmig
symmetrisch gestaltet ist, wobei die nach
innen gezogenen Lagervorsprünge (28) in den
Lücken (23) bei einer Relativbewegung von
Sperrglied (24) und Seilscheibe (15) beweglich sind.

5. Sicherheitsgurtaufroller nach Anspruch 4,
dadurch gekennzeichnet, daß die einander
zugewandten Flächen von Ringabschnitten (22)
und Lagervorsprüngen (28) formentsprechend
ausgestaltet sind.

6. Sicherheitsgurtaufroller nach einem der Ansprüche
2 - 5, dadurch gekennzeichnet, daß der Exzenterpunkt (E) für die exzentrische Lagerung des
Sperrgliedes (24) außerhalb des Sperrgliedes
(24) zur Bewegung des Sperrgliedes (24) auf
einer Kreisbahn (27) angeordnet ist.

7. Sicherheitsgurtaufroller nach Anspruch 6,
   dadurch gekennzeichnet, daß die Flächen
   der Ringabschnitte (22) entsprechend dem
   Verlauf der Kreisbahn (27) gerundet sind.

8. Sicherheitsgurtaufroller nach einem der Ansprüche 1 - 7, dadurch gekennzeichnet, daß
   das Sperrglied (24) über einen an seinem
   Umfang angreifenden Federarm (30) in Umdrehungsrichtung der Seilscheibe (15) an dieser gehalten
   ist.

9. Sicherheitsgurtaufroller nach einem der Ansprüche 1 - 8, dadurch gekennzeichnet, daß
   das Sperrglied (24) an der Seilscheibe (15)
   mittels einer Klammer (29) axial gesichert ist.

10. Sicherheitsgurtaufroller nach Anspruch 8
    und 9, dadurch gekennzeichnet, daß Klammer
    (29) und Federarm (30) einstückig ausgebildet sind.

11. Sicherheitsgurtaufroller nach einem der Ansprüche 1 - 10, dadurch gekennzeichnet, daß
    auf der Gurtaufwickelwelle (16) formschlüssig
    eine Kupplungsscheibe (32) gelagert ist.

12. Sicherheitsgurtaufroller nach Anspruch 11,
    dadurch gekennzeichnet, daß der Formschluß
    zwischen Gurtaufwickelwelle (16) und Kupplungsscheibe (32) durch eine abschnittsweise Ausbildung der Gurtaufwickelwelle (16) als Vierkant
    (33) sowie durch eine entsprechende Ausnehmung
    in der Kupplungsscheibe (32) gegeben ist.

13. Sicherheitsgurtaufroller nach Anspruch
    11 oder 12, dadurch gekennzeichnet, daß
    die Kupplungsscheibe (32) der Seilscheibe
    (15) zugewandt einen in die Ebene des
    Sperrgliedes (24) reichenden, innenverzahnten Zahnring (31) trägt.

14. Sicherheitsgurtaufroller nach Anspruch
    13, dadurch gekennzeichnet, daß die Verbindung
    von Zahnring (31) und Kupplungsscheibe
    (32) eine Verdrehung der Bauteile um
    ein gewisses Maß gegeneinander zulassend
    ausgestaltet ist.

15. Sicherheitsgurtaufroller nach Anspruch
    14, dadurch gekennzeichnet, daß zur Verbindung
    von Zahnring (31) und Kupplungsscheibe
    (32) wenigstens zwei Schrauben (34) vorgesehen sind, die in in dem Zahnring
    (31) ausgebildeten langlochartigen Ausnehmungen (35) beweglich sind.

16. Vorrichtung nach Anspruch 14 oder 15,
    dadurch gekennzeichnet, daß der Zahnring
    (31) wenigstens zwei Zapfen (36) aufweist,
    die in entsprechend in der Kupplungsscheibe
    (32) angeordnete langlochartige Schlitze
    (37) eingreifen, die im Abstand des Durchmessers der Zapfen (36) taillenförmige
    Einengungen (38) aufweisen.

17. Sicherheitsgurtaufroller nach einem
    der Ansprüche 1 - 16, dadurch gekennzeichnet, daß auf der dem Gurtaufroller (10)
    abgewandten Seite der Seilscheibe (15)
    ein napfartiges Gehäuse (14) angeordnet ist, welches nach der einen Seite die Seilscheibe (15) bis zur Anlage am Gehäuseschenkel (11) des Gurtaufrollers (10) übergreift und zur anderen Seite für die Aufnahme einer Rückholfeder (19) für die Gurtaufwickelwelle (16) eingerichtet ist.

18. Sicherheitsgurtaufroller nach Anspruch 17, dadurch gekennzeichnet, daß das Gehäuse (14) über wenigstens zwei am Gehäuse (14) ausgebildete und in entsprechende Ausnehmungen in der Seilscheibe (15) eingreifende Abreißzapfen (21) mit dieser verbunden ist.

Zusammenfassung

0153726

Fig.1

0153726

# Fig. 2

0153726

# Fig.3